# FASCICULE DE BREVET EUROPEEN

(11) **EP 0 425 331 B1**
(45) Date de publication et mention de la délivrance du brevet: **01.09.1993**
(21) Numéro de dépôt: 90402791.9
(22) Date de dépôt: 08.10.1990
(51) Int. Cl.: B65B 69/00, B65G 51/00

(54) **Dispositif pour vider par immersion des caisses contennant des objects flottants, tels que notamment des fruits**
Vorrichtung zum Entleeren durch Untertauchen von Kästen, welche schwimmfähige Gegenstände enthalten, insbesondere Obst
Device for emptying by immersing boxes containing floating articles, in particular fruit

(30) Priorité: 26.10.1989 FR 8914069
(43) Date de publication de la demande: 02.05.1991
(73) Titulaire: M.A.F.(MATERIEL POUR L'ARBORICULTURE FRUITIERE) S.A., F-82001 Montauban Cédex (FR)
(72) Inventeur: Blanc, Philippe, F-82000 Montauban (FR)
(74) Mandataire: Armengaud Ainé, Alain

(56) Documents cités:
- EP-A- 0 015 848
- EP-A- 0 167 082
- FR-A- 2 327 954
- GB-A- 2 124 571

## Description

La présente invention concerne un dispositif permettant de vider par immersion des caisses contenant des objets flottants, tels que notamment des fruits.

On sait que lors des opérations de manipulation et de tri d'objets flottants, tels que notamment des fruits, on est amené à vider des caisses, ou palox, contenant ces fruits, dans des cuves remplies d'eau, ce vidage étant effectué par immersion des caisses dans lesdites cuves.

GB-A-2 124 571 décrit un dispositif du type mentionné ci-dessus comprenant une cuve d'immersion, contenant de l'eau dans laquelle sont positionnées les caisses à vider.

A L'heure actuelle, ces opérations lorsqu'elles sont automatisées nécessitent une succesion de machine différentes ayant chacune une fonction bien précise :
- une première machine qui reçoit les piles de caisses ou palox arrivant selon une file généralement continue, qui isole une pile et qui aligne les caisses les unes à la suite des autres sur un système de transfert ;
- un dispositif de préhension conçu de façon à saisir les caisses (ou piles de caisses une à une et à les immerger dans la cuve pour les vider) et enfin, à les ressortir vides de la cuve d'immersion pour les placer sur un transporteur et ;
- un dispositif conçu de façon à reconstituer les piles de caisses vides, cet empilage permettant de limiter les opérations de manutention ;
- EP-A-0 167 082 décrit partiellement l'un des dispositifs mentionnés ci-dessus : il s'agit d'un dispositif qui est conçu de façon à amener une à une les caisses pour les immerger dans la cuve d'immersion où elles sont ensuite vidées.

On conçoit que de telles installations sont coûteuses et que leur automatisation est rendue compliquée en raison du nombre de machines différentes qu'elles comportent. Pour tenter de résoudre ce problème on a mis au point une machine en vue de réaliser l'ensemble des opérations qui, dans les systèmes antérieures, était effectué par une pluralité de machines différentes. Un exemple de réalisation d'une telle machine est décrit par EP-A- 167 082. Cette machine comporte une cuve d'immersion contenant de l'eau dans laquelle les caisses sont amenées successivement et un système de manipulation des caisses conçu de façon à prélever une caisse, à l'immerger dans la cuve et à l'évacuer ensuite. Cette machine selon la technique antérieure présente l'inconvénient selon lequel son système de manipulation de caisses est particulièrement compliqué en raison de la complexité de sa chaîne cinématique assurant le déplacement des caisses à l'état horizontal et qu'en outre, elle n'assure pas la totalité des fonctions qui doivent être remplies lors du vidage de caisses. Cette complexité entraîne des prix de revient et d'entretien particulièrement élevés et, en outre, la non universalité de cette machine oblige à prévoir des systèmes annexes. C'est la raison pour laquelle le besoin se fait sentir de disposer d'une machine plus simple et, cependant, fiable susceptible d'effectuer toutes les fonctions nécessaires, à savoir le dépilage des caisses, leur vidage dans l'eau et le rempilage des caisses. C'est là le but de la présente invention.

En conséquence, cette invention a pour objet un dispositif pour vider par immersion dans l'eau des caisses contenant des objets flottants, tels que notamment des fruits, qui comprend une cuve d'immersion contenant de l'eau dans laquelle les caisses à vider sont amenées successivement et un système de manipulation des caisses conçu de façon à prélever une caisse ou une pile de caisses, à l'immerger dans ladite cuve et à l'évacuer après vidage, caractérisé en ce que ledit système de manipulation des caisses comprend :
- un chariot se déplaçant selon une trajectoire située dans un plan horizontal ;
- des moyens de préhension des caisses ou des piles de caisses, montés sur ledit chariot ;
- un arbre vertical , à l'extrémité duquel sont montés lesdits moyens de préhension, ledit arbre vertical pouvant se déplacer selon un mouvement de translation vertical par rapport audit chariot,

Selon une caractéristique du dispositif de l'invention, celui-ci comprend une voie de roulement horizontale, le long de laquelle ledit chariot peut se déplacer selon un mouvement de translation selon un axe situé dans un plan horizontal.

Selon l'invention, les moyens de préhension des caisses ou des piles de caisses peuvent être réalisés sous la forme d'un système à fourches, à pinces, à cages, ou par moyen connu permettant de manipuler les caisses ou les piles de caisses tout en assurant leur stabilité, à l'état plein ou à l'état vide, durant les déplacements des caisses ou des piles de caisses et pendant leur immersion dans la cuve pour leur vidage.

Selon une variante de la présente invention, le chariot élévateur est porté par un bras qui peut se déplacer selon un mouvement de rotation de manière à permettre aux moyens de préhension de saisir une caisse pleine, ou une pile de caisses pleines, à l'amener au-dessus de la cuve dans laquelle elle est plongée pour le vidage à l'aide desdits moyens de translation verticale puis à évacuer la caisse vide ou la pile de caisses vides.

D'autres caractéristiques et avantages de la présente invention ressortiront de la description faite ci-après en référence aux dessins annexés qui en illustrent un exemple de réalisation dépourvu de tout caractère limitatif. Sur les dessins :
- la figure 1 est une vue en perspective d'un dispositif selon la présente invention ;
- la figure 2 est une vue en élévation frontale du dispositif selon l'invention ;
- la figure 3 est une vue en élévation latérale de la figure 2 ;
- la figure 4 est une vue en plan de la figure 2;
- la figure 5 est une vue de détail représentant à échelle agrandie et en élévation latérale les moyens de préhension des caisses ou des piles de caisses du dispositif illustré par la figure 1 et ;
- la figure 6 est une vue en plan similaire à la figure 4 illustrant une variante de réalisation du dispositif objet de l'invention.

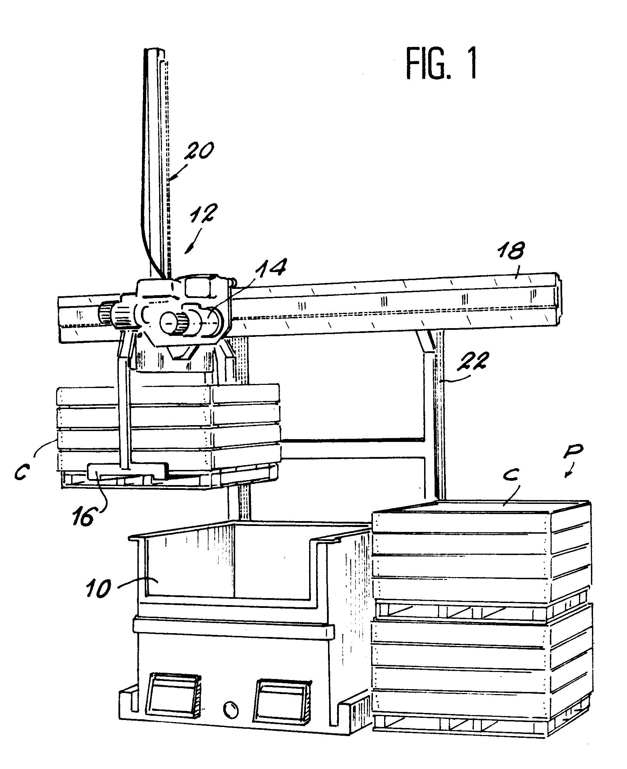

En se référant aux dessins, on voit que le dispositif selon l'invention comprend dans sa partie centrale une cuve 10, contenant de l'eau dans laquelle des caisses remplies d'objets flottants, tels que notamment des fruits doivent être amenées afin de les vider. Cette cuve 10 est de conception tout à fait classique et elle ne sera pas décrite en détail. Sur cette figure 1, on a représenté en partie droite du dessin un empilage P de caisses pleines à partir duquel on veut prélever une pile C contenant un nombre déterminé de caisses pleines. Bien entendu, le dispositif selon l'invention peut également prélever une à une les caisses d'une pile telle que C.

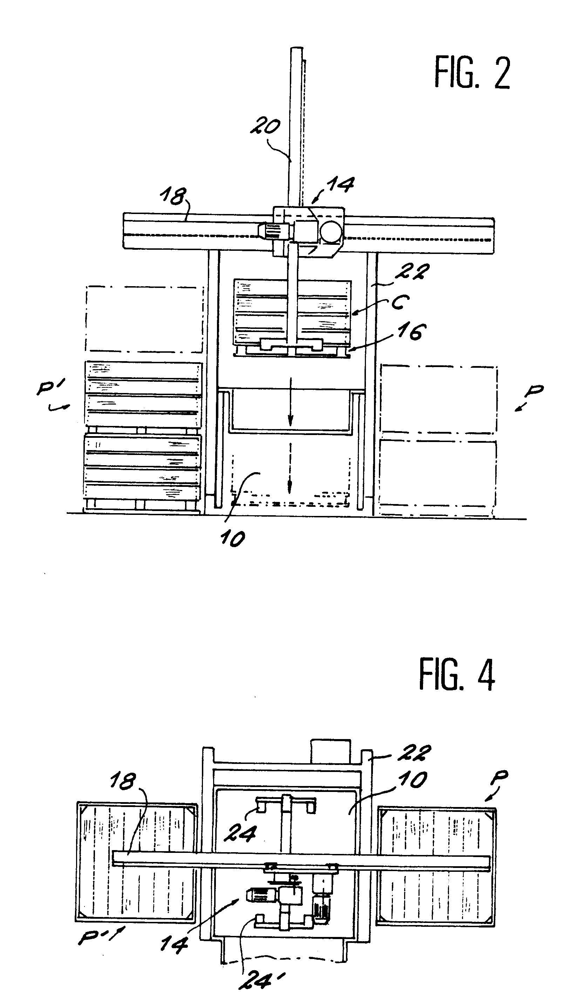

Le dispositif comporte par ailleurs un système de manipulation désigné dans son ensemble par la référence 12 sur la figure 1 qui est conçu de façon à prélever une à une, une caisse pleine ou une pile de caisses C, à l'immerger dans la cuve 10 et à l'évacuer après vidage pour la placer sur un empilage P' de caisses vidées (figure 2). Selon l'invention, ce système de manipulation 12 comporte d'une part des moyens permettant de saisir les caisses ou les piles de caisses et de les déplacer selon deux mouvements de translation perpendiculaires: un mouvement de translation dans un plan horizontal pour déplacer les caisses de l'empilage P vers la cuve 10 puis vers l'empilage P' et un mouvement de translation dans un plan vertical pour assurer la préhension des caisses ou des piles de caisses telles que C et pour effectuer leur immersion dans la cuve 10 et leur évacuation de cette cuve après vidage.

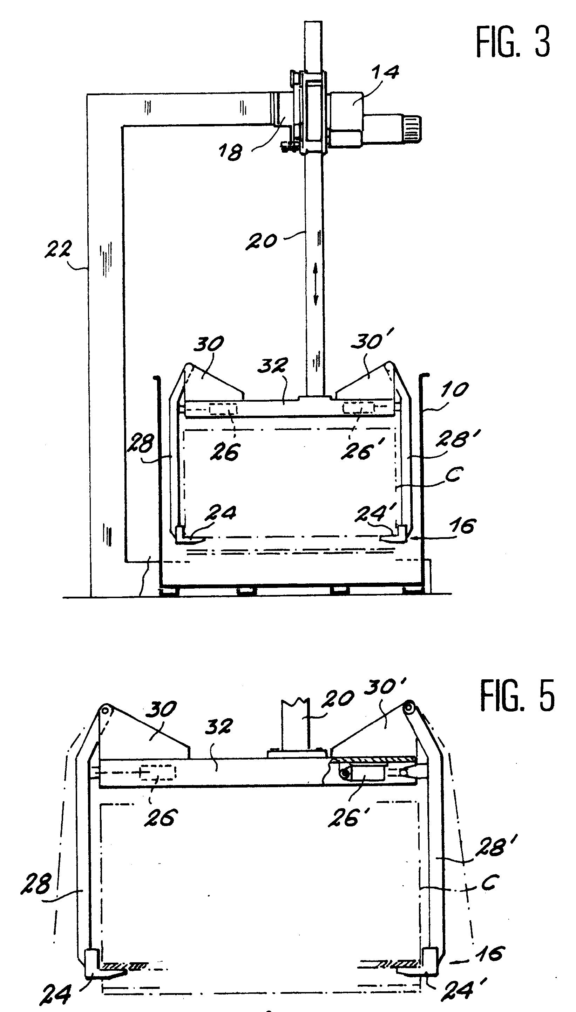

Dans cet exemple de réalisation le système de manipulation comporte un chariot mobile 14, entraîné par exemple par l'intermédiaire d'un moteur électrique. Comme on le voit sur les dessins et notamment sur les figures 2 et 3, ce chariot est du type élévateur et il est pourvu de galets de roulement de manière à pouvoir se déplacer sur une voie de roulement horizontale 18 montée sur le bâti fixe 22 du dispositif. Ainsi, le chariot élévateur 14 peut se déplacer selon le premier mouvement de translation, linéaire ou circulaire, dans un plan horizontal.

Le chariot 14 supporte par ailleurs un arbre vertical 20 qui est monté de manière à pouvoir se déplacer par rapport au chariot 14 selon un mouvement de translation verticale. Ce déplacement peut être obtenu par tout moyen approprié, par exemple par un système pignon-crémaillères entraîné par le moteur du chariot élévateur 14. Comme on le voit sur les figures, l'arbre vertical 20 comporte les moyens de préhension 16 des caisses ou de piles de caisses C.

Dans cet exemple de réalisation qui ne présente aucun caractère limitatif, ces moyens de préhension sont réalisés sous la forme de fourches 24, 24', conçues de façon à venir se placer sous la pile C de manière à la saisir en vue de son soulèvement par l'arbre 20. Ces fourches 24, 24' sont solidaires de bras 28, 28' articulés sur des équerres 30, 30' soudées sur une traverse 32 elle-même fixée à l'extrémité inférieure de l'arbre vertical 20 ainsi qu'on peut le voir en détail sur la figure 2. Le déplacement des fourches 24 et 24' est obtenu à l'aide de vérins 26, 26', pneumatiques ou hydrauliques logés de préférence dans la traverse 32, les tiges de ces vérins comportant des poussoirs qui viennent prendre appui sur les bras de support 28, 28' des fourches 24, 24', afin d'obtenir leur écartement pour libérer les piles de caisses.

Le fonctionnement de ce dispositif est le suivant :
- le système de manipulation 12 est déplacé vers la droite en regardant la figure 1 de manière que les moyens de préhension 16 puissent venir saisir une pile de caisses C pleines, prélevée sur l'empilage P. Cette opération est obtenue en déplaçant le chariot mobile 14 le long du chemin de roulement 18 jusqu'à l'amener au-dessus de l'empilage P, puis la translation verticale de l'arbre 20 déplace les fourches 24, 24' pour les positionner, à l'aide des vérins 26, 26' sous la pile choisie, celle-ci étant ensuite soulevée par déplacement vertical de l'arbre 20 grâce au chariot élévateur 14.
- le déplacement en translation horizontale du chariot élévateur 14, portant la pile de caisses C, le long du chemin de roulement 18 permet d'amener cette pile au-dessus de la cuve 10 et le déplacement en translation verticale de l'arbre 20 assure ensuite l'immersion de la pile C dans la cuve 10 où les objets flottants, tels que notamment des fruits, sont vidés par immersion.
- un déplacement en translation verticale de l'arbre 20 permet alors de faire ressortir la pile de caisses vides C de la cuve 10 et ensuite cette pile est évacuée par le chariot élévateur 14 se déplaçant le long de la voie de roulement 18, vers la gauche du dessin de manière à placer la pile C de caisses vides sur l' empilage P'.

Bien entendu, l'ensemble des opérations mentionnées ci-dessus est commandé par une armoire d'automation qui permet de réaliser la manipulation des caisses, ou des piles de caisses selon une séquence programmable.

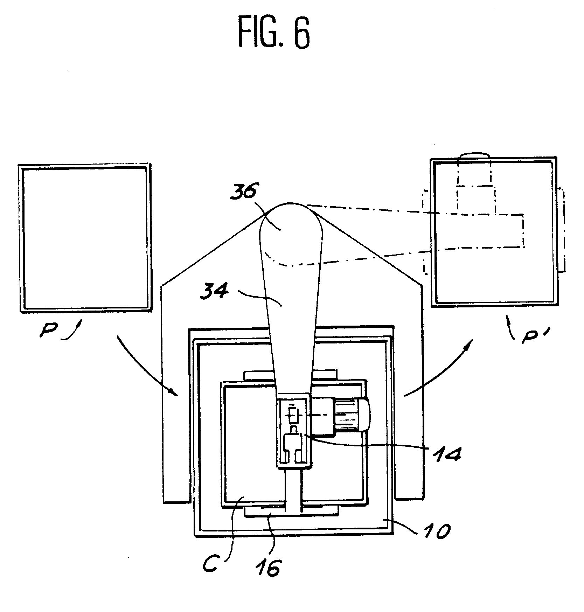

Dans la variante illustrée par la figure 6, on a prévu des moyens de déplacement à rotation pour amener le chariot élévateur 14 et les moyens de préhension 16 au-dessus de la pile de caisses pleines P pour prélever une caisse pleine ou une pile de caisses pleines C, comme indiqué ci-dessus, pour l'amener ensuite au-dessus de la cuve 10 où elle est plongée grâce aux moyens de translation verticale décrits ci-dessus et enfin pour amener la pile de caisses ainsi vidées dans la cuve sur la pile P' de caisses vides. Comme représenté sur la figure 6, ces moyens de rotation sont réalisés sous la forme d'un bras 34 muni à l'une de ses extrémités du chariot élévateur 14 et des moyens de préhension 16, ce bras étant monté à rotation par rapport à un arbre vertical 36. Le fonctionnement de cette variante est par ailleurs identique à celui décrit ci-dessus.

## Revendications

1. Dispositif pour vider par immersion dans l'eau des caisses contenant des objets flottants, tels que notamment des fruits, qui comprend une cuve d'immersion (10) contenant de l'eau dans laquelle les caisses à vider (C) sont amenées successivement et un système de manipulation (12) des caisses congru de façon à prélever une caisse ou une pile de caisses (C), à l'immerger dans ladite cuve et à l'évacuer après vidage, caractérisé en ce que ledit système de manipulation des caisses comprend :
- un chariot (14) se déplaçant selon une trajectoire située dans un plan horizontal
- des moyens (16) de préhension des caisses ou des piles de caisses (C), montés sur ledit chariot;
- un arbre vertical (20), à l'extrémité duquel sont montés lesdits moyens de préhension (16), ledit arbre vertical pouvant se déplacer selon un mouvement de translation vertical par rapport audit chariot (14).

2. Dispositif selon la revendication 1 caractérisé en ce que lesdits moyens de préhension des caisses ou de la caisse de dessus des piles de caisses (C) sont réalisés sous la forme d'un système de fourches (24, 24', 28, 28'), commandé par des vérins (26, 26').

3. Dispositif selon l'une des revendications précédentes, caractérisé en ce qu'il comprend une voie de roulement horizontale (18), le long de laquelle ledit chariot peut se déplacer selon un mouvement de translation selon un axe situé dans le plan horizontal.

4. Dispositif selon l'une des revendications 1 ou 2 caractérisé en ce que ledit chariot élévateur (14) est porté par un bras (34) qui peut se déplacer selon un mouvement de rotation par rapport à un arbre vertical fixe (36) de manière à permettre auxdits moyens de préhension (16) de saisir une caisse pleine, ou la caisse de dessus de la pile (C) de caisses pleines pour l'amener au-dessus de ladite cuve (10), dans laquelle elle est plongée pour être vidée par lesdits moyens de translation verticale (20) et à finalement évacuer ladite caisse vide ou ladite pile de caisses vides pour l'amener sur un empilage de caisses vides.

5. Dispositif selon l'une quelconque des revendications précédentes, caractérisé en ce que les déplacements des moyens de préhension et ceux du chariot élévateur (14) sont commandés par un système d'automation permettant de réaliser la manipulation des caisses ou des piles de caisses (C) selon une séquence programmable.

## Patentansprüche

1. Vorrichtung zum Entleeren von Kästen, die schwimmfähige Gegenstände, insbesondere Obst, enthalten, durch Eintauchen in Wasser, die einen Eintauchbehälter (10), der das Wasser enthält, in den die zu leerenden Kästen (C) nacheinander eingeführt werden, und ein Bedienungssystem (12) für die Kästen aufweist, das derart ausgebildet ist, daß ein Kasten oder ein Stapel von Kästen (C) angehoben, in den Behälter eingetaucht und nach dem Entleeren entfernt wird, **dadurch gekennzeichnet, daß** das Bedienungssystem für die Kästen umfaßt:
- einen Wagen (14), der sich entlang eines in einer horizontalen Ebene gelegenen Weges bewegt;
- eine auf dem Wagen angebrachte Greifvorrichtung (16) für die Kästen oder die Stapel von Kästen (C);
- eine vertikale Achse (20), an deren Ende die Greifeinrichtung (16) angebracht ist, wobei die vertikale Achse sich entlang einer bezüglich des Wagens (14) vertikalen Translationsbewegung bewegen kann.

2. Vorrichtung nach Anspruch 1, **dadurch gekennzeichnet, daß** die Vorrichtung zum Greifen der Kästen oder des Kastens von oberhalb der Stapel von Kästen (C) in Form eines Systems aus Gabeln (24, 24', 28, 28'), die durch Steuerzylinder (26, 26') gesteuert werden, ausgebildet sind.

3. Vorrichtung nach einem der vorhergehenden Ansprüche, **dadurch gekennzeichnet, daß** sie eine horizontale Fahrstrecke (18) umfaßt, entlang derer der Wagen sich entlang einer Translationsbewegung entlang einer in der horizontalen Ebene gelegenen Achse bewegen kann.

4. Vorrichtung nach einem der Ansprüche 1 oder 2, **dadurch gekennzeichnet, daß** der Hubwagen (14) von einem Arm (34) getragen wird, der gemäß einer Rotationsbewegung bezüglich eines vertikalen starren Ständers (36) so verschiebbar ist, daß die Greifvorrichtung (16) einen vollen Kasten oder den Kasten oben auf dem Stapel (C) von vollen Kästen ergreift, um ihn über den Behälter (10) zu fahren, in den er eingetaucht wird, um durch die Vertikalverschiebebewegungseinrichtung (20) geleert zu werden, und um schließlich den leeren Kasten oder den Stapel von leeren Kästen heraus und auf einen Stapel von leeren Kästen zu führen.

5. Vorrichtung nach einem der vorhergehenden Ansprüche, **dadurch gekennzeichnet, daß** die Verschiebungen der Greifvorrichtungen und die des Hubwagens (14) durch ein Automationssystem gesteuert werden, welches es ermöglicht, die Handhabung der Kästen oder der Stapel von Kästen (C) in einer programmierbaren Abfolge zu verwirklichen.

## Claims

1. Device for emptying cases or crates containing floating objects, such as in particular fruit, by immersion in water and which comprises an immersion tank (10) containing the water and into which are successively brought the cases (C) to be emptied and a handling system (12) for the cases designed so as to remove one case or a stack of cases (C) to be immersed in said tank and to discharge same after emptying, characterized in that the said case handling system comprises a truck (14) moving along a path located in a horizontal plane, means (16) for gripping the cases or stacks of cases (C) on said truck, a vertical shaft (20), on the end of which are mounted the said gripping means (16), said vertical shaft being displaceable in accordance with a vertical translation movement with respect to said truck (14).

2. Device according to claim 1, characterized in that the means for gripping the cases or case on the top of the stack of cases (C) are constructed in the form of a system of forks (24, 24', 28, 28') controlled by jacks (26, 26').

3. Device according to one of the preceding claims, characterized in that it comprises a horizontal runway (18), along which the truck can move in a translation movement in accordance with an axis located in the horizontal plane.

4. Device according to either of the claims 1 or 2, characterized in that the lift truck (14) is carried by an arm (34), which can move in a rotary movement with respect to a fixed vertical shaft (36), so as to enable the gripping means (16) to grasp a full case, or the top case of the stack (C) of full cases, in order to bring it above the said tank (10) , in which it is immersed for emptying by said vertical translation means (20) and finally said empty case or said empty case stack is discharged in order to bring it onto a stack of empty cases.

5. Device according to any one of the preceding claims, characterized in that the displacements of the gripping means and those of the lift truck (14) are controlled by an automation system making it possible to carry out the manipulation of the cases or case stack (C) in accordance with a programmable sequence.
